# FASCICULE DE BREVET EUROPEEN

(11) **EP 0 665 143 B1**
(45) Date de publication et mention de la délivrance du brevet: **29.04.1998**
(21) Numéro de dépôt: 95100611.3
(22) Date de dépôt: 18.01.1995
(51) Int. Cl.: B60S 1/38

(54) **Lame d'essuyage pour un essuie-glace de véhicule automobile**
Wischerblatt für den Scheibenwischer eines Kraftfahrzeugs
Wiper blade for a windscreen wiper of a motor vehicle

(30) Priorité: 28.01.1994 FR 9401057
(43) Date de publication de la demande: 02.08.1995
(73) Titulaire: VALEO SYSTEMES D'ESSUYAGE, 78320 La Verrière (FR)
(72) Inventeur: Mege, Bernard, F-63000 Clermont-Ferrand (FR); Sortais, Jean-Luc, F-63100 Beaumont (FR)
(74) Mandataire: Gamonal, Didier

(56) Documents cités:
- EP-A- 0 439 390
- DE-U- 1 811 310
- DE-U- 8 006 858
- FR-A- 2 253 649
- GB-A- 1 443 508
- US-A- 2 186 193

## Description

La présente invention concerne une lame d'essuyage, notamment pour un essuie-glace de véhicule automobile.

L'invention concerne plus particulièrement une lame d'essuyage réalisée par extrusion en un matériau déformable élastiquement et comportant, agencées successivement le long de l'axe médian de la section transversale de la lame, un talon supérieur de montage prévu pour être relié à une structure de support de la lame, une bande médiane de liaison formant charnière et une partie inférieure de raclage prévue pour coopérer avec une vitre à essuyer.

Un exemple de réalisation d'une telle lame d'essuyage est décrit et représenté dans le document FR-A-2.253.649.

Afin de rigidifier la partie supérieure de la lame d'essuyage qui permet d'assurer son montage sur une structure articulée de support appartenant à un balai d'essuie-glace, il est connu de prévoir une ou plusieurs vertèbres longitudinales de renfort qui, en association avec le matériau élastomère, permettent de constituer un talon supérieur de liaison de la lame d'essuyage qui présente une rigidité suffisante.

Les vertèbres peuvent être réalisées sous la forme de plaques de renfort longitudinales indépendantes qui sont insérées dans des logements complémentaires formés lors de l'extrusion dans le talon supérieur, ou être réalisées sous la forme d'inserts noyés dans le corps en matériau élastomère du talon supérieur, cette dernière réalisation permettant de protéger le métal des vertèbres des phénomènes de corrosion.

La partie médiane de la lame d'essuyage en forme de bande longitudinale médiane de liaison constitue, en fonctionnement, la charnière d'articulation entre la partie supérieure de liaison et la partie inférieure de raclage qui est en général en forme de flèche dont la pointe est prévue pour coopérer avec la vitre à essuyer.

La bande médiane de liaison est soumise à des efforts de traction très importants ainsi qu'à des pliages alternés et répétés lors de chaque inversion du sens de balayage de l'essuie-glace.

La bande de liaison formant charnière constitue donc une portion particulièrement fragile de la lame d'essuyage.

Le document US-A-2 186 193 propose une lame d'un type différent, sans bande médiane de liaison et de section réduite. Elle possède un insert raidisseur qui permet de modifier l'élasticité et la flexibilité de la lame afin d'obtenir une raideur satisfaisante malgré la finesse de la lame.

La présente invention a pour but de proposer une lame d'essuyage du type décrit dans FR-A-2 253 649 dont la fiabilité soit accrue tout en conservant ses propriétés d'élasticité et de flexibilité.

Dans ce but l'invention propose une lame d'essuyage du type mentionné précédemment, caractérisée en ce que la bande de liaison comporte au moins un insert longitudinal de renfort qui n'altère pas les caractéristiques d'élasticité et de flexibilité de la lame d'essuyage.

Selon divers modes de réalisation de l'invention :
- l'insert de renfort est relié à la bande de liaison de la lame lors de l'extrusion de cette dernière;
- l'insert de renfort est noyé dans la bande de liaison ;
- l'insert de renfort s'étend longitudinalement sur toute la longueur de la lame d'essuyage ;
- la bande de liaison comporte une série d'inserts de renfort superposés le long de l'axe médian de la section longitudinale de la bande de liaison ;
- l'insert de renfort est un organe souple ;
- l'insert de renfort est réalisé sous la forme d'un filin de renfort ;
- l'insert de renfort est réalisé sous la forme d'une bande renfort ;
- l'insert de renfort est une bande de textile ;
- la lame comporte deux ailes latérales opposées qui s'étendent transversalement de part et d'autre de la bande de liaison ;
- l'insert de renfort est situé dans la zone de raccordement entre les ailes latérales et la bande de liaison ;
- l'insert de renfort s'étend transversalement au moins en partie dans les ailes latérales ;
- la partie supérieure comporte un talon supérieur de liaison renforcé par au moins une vertèbre longitudinale de renfort ; et
- la vertèbre de renfort est noyée dans le talon supérieur de liaison.

D'autres caractéristiques et avantages de l'invention apparaîtront à la lecture de la description détaillée qui va suivre pour la compréhension de laquelle on se reportera au dessin annexé dans lequel :
- La figure 1 est une vue en perspective d'un tronçon d'un premier mode de réalisation d'une lame d'essuyage conforme aux enseignements de l'invention ;
- la figure 2 est une vue similaire à celle de la figure 1 illustrant un deuxième mode de réalisation de la lame d'essuyage ; et
- la figure 3 est une vue similaire à celle de la figure 1 illustrant un troisième mode de réalisation de la lame d'essuyage.

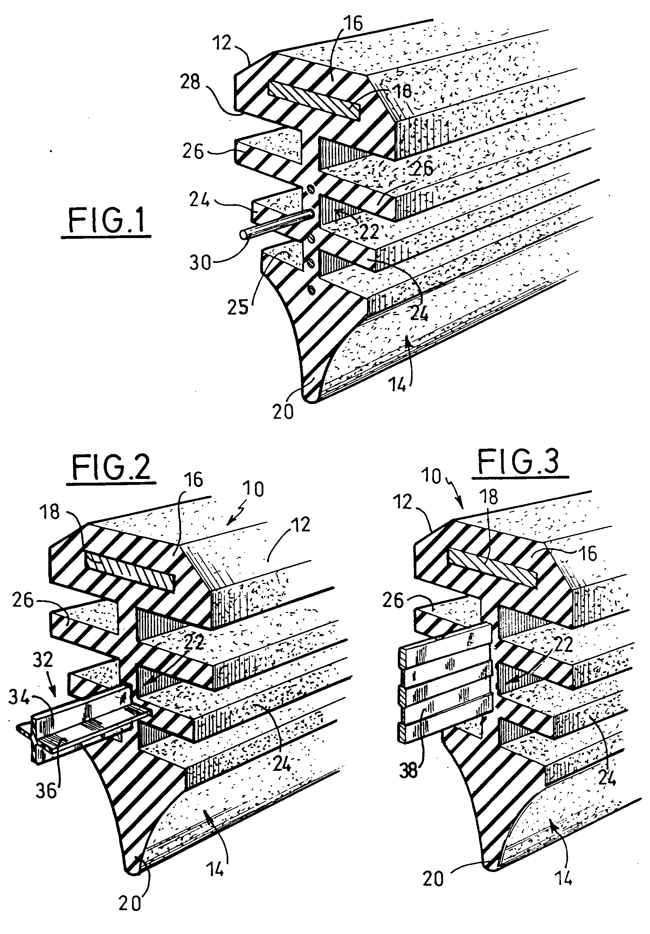

On a représenté sur la figure 1 une lame, ou raclette, d'essuyage 10 pour un balai d'essuie-glace (non représenté).

Selon une conception connue, la lame d'essuyage 10 comporte une partie ou tête supérieure de liaison 12 et une partie inférieure de raclage 14.

La tête de liaison 12 est réalisée sous la forme d'un talon massif 16 qui est renforcé sur toute sa longueur par une vertèbre longitudinale de renfort 18 qui est noyée dans le matériau élastomère de la lame d'essuyage lors de l'extrusion de cette dernière selon un procédé connu.

Le talon supérieur rigidifié 12 s'étend longitudinalement et il est prévu pour être reçu dans une série de griffes (non représentées) appartenant à la structure articulée de support de la lame pour relier cette dernière au balai d'essuie-glace.

Dans le mode de réalisation illustré sur les figures, la partie inférieure de raclage 14 présente, en section transversale, une forme d'extrémité de flèche 20 dont la pointe 18 est prévue pour coopérer avec la vitre à essuyer.

La partie de raclage 14 est reliée au talon supérieur de liaison 12 par une bande médiane de liaison 22 qui est extrudée en même temps que le corps 16 du talon 12 et la partie inférieure de raclage 14.

La bande de liaison 22 s'étend longitudinalement dans le plan vertical médian de la section transversale de la lame d'essuyage.

Selon une conception connue, la lame d'essuyage comporte également deux ailes latérales opposées 24 qui s'étendent transversalement de part et d'autre de la bande médiane de liaison 22 au-dessus de la face supérieure 25 de la partie inférieure de raclage 14.

La lame d'essuyage comporte également deux ailes supérieures transversales 26 qui s'étendent transversalement de part et d'autre de la bande de liaison 22 en-dessous de la face inférieure 28 du talon supérieur de liaison 16 et qui assure la protection des griffes de la structure articulée de support de la lame.

Conformément à l'invention, il est prévu au moins un insert de renfort de la bande de liaison 22.

Dans le premier mode de réalisation illustré sur la figure 1, la bande de liaison 22 comporte une série d'inserts de renfort longitudinaux qui sont réalisés sous la forme d'une série de fils de renfort 30 qui sont superposés verticalement le long de la portion principale de la bande de liaison 22.

Chaque fil ou filin de renfort 30 est noyé dans le corps du matériau élastomère de la bande de liaison 22 lors de l'extrusion de la lame d'essuyage.

Chaque fil ou filin 30 est un élément souple de renfort qui n'altère pas les caractéristiques d'élasticité et de flexibilité de la lame d'essuyage mais qui la renforce pour éviter tout phénomène de déchirement de cette bande longitudinale 22 lors de l'utilisation de l'essuie-glace.

Chaque filin 30 peut être réalisé en fibres textiles, métalliques ou plastiques.

Dans le mode de réalisation illustré sur la figure 2, la bande de liaison 22 est renforcée dans sa partie centrale par un insert de renfort 32 qui est réalisé sous la forme d'un profilé longitudinal en croix dont la branche verticale 34 est noyée dans le corps de la bande de liaison 22 et dont les portions opposées de la branche horizontale 36 s'étendent en partie à l'intérieur des ailes latérales 24.

Dans le mode de réalisation illustré sur la figure 3, l'élément de renfort 38 de la bande de liaison 22 se présente sous la forme d'une bande de renfort qui est noyée dans le corps de la bande de liaison 22.

La bande de renfort 38 est par exemple une bande longitudinale de textile qui s'étend verticalement sur la plus grande partie de la hauteur de la bande de liaison 22 et notamment en regard des zones de raccordement des ailes latérales 24 et 26 avec la bande de liaison 22.

L'invention n'est pas limitée aux modes de réalisation qui viennent d'être décrits et elle englobe notamment toutes les formes possibles de section transversale pour les éléments longitudinaux de renfort, ainsi que tous les choix ou associations de matériaux pour réaliser ces derniers.

L'invention est particulièrement facile à mettre en oeuvre dans la mesure où chaque élément de renfort est inséré directement dans le corps de la bande de liaison 22 lors de l'extrusion de la lame d'essuyage, cette coinsertion des inserts de renfort pouvant être effectuée simultanément avec l'insertion d'une vertèbre de renfort du talon supérieur de liaison.

Dans le cas où l'insert longitudinal de renfort est réalisé en métal, ce dernier est directement protégé de la corrosion par le matériau élastomère dans lequel il est noyé.

## Revendications

1. Lame d'essuyage (10), notamment pour un essuie-glace de véhicule automobile, réalisée par extrusion en un matériau déformable élastiquement et comportant, agencées successivement le long de l'axe médian de la section transversale de la lame (10), un talon supérieur (12) de montage prévu pour être relié à une structure de support de lame (10), une bande médiane de liaison (22) formant charnière et une partie inférieure de raclage (14) prévue pour coopérer avec une vitre à essuyer, caractérisée en ce que la bande de liaison (22) comporte au moins un insert longitudinal de renfort (30, 32, 38) qui n'altère pas les caractéristiques d'élasticité et de flexibilité de la lame d'essuyage.

2. Lame d'essuyage selon la revendication 1, caractérisée en ce que l'insert de renfort est relié à la bande de liaison (22) de la lame d'essuyage (10) lors de l'extrusion de cette dernière.

3. Lame d'essuyage selon l'une des revendications 1 ou 2, caractérisée en ce que l'insert de renfort est noyé dans la bande de liaison (22).

4. Lame d'essuyage selon l'une quelconque des revendications 1 à 3, caractérisée en ce que l'insert de renfort s'étend longitudinalement sur toute la longueur de la lame d'essuyage.

5. Lame d'essuyage selon l'une quelconque des revendications précédentes, caractérisée en ce que la bande de liaison (22) comporte une série d'inserts de renfort superposés (30) le long de l'axe médian de la section longitudinale de la bande de liaison (22).

6. Lame d'essuyage selon l'une quelconque des revendications précédentes, caractérisée en ce que l'insert de renfort est un organe souple.

7. Lame d'essuyage selon la revendication 6, caractérisée en ce que l'insert de renfort est réalisé sous la forme d'un filin de renfort (30).

8. Lame d'essuyage selon la revendication 6, caractérisée en ce que l'insert de renfort est réalisé sous la forme d'une bande de renfort (38).

9. Lame d'essuyage selon la revendication 8, caractérisée en ce que l'insert de renfort (38) est une bande de textile.

10. Lame d'essuyage selon l'une quelconque des revendications précédentes, caractérisée en ce qu'elle comporte deux ailes latérales opposées (24) qui s'étendent transversalement de part et d'autre de la bande de liaison (22).

11. Lame d'essuyage selon la revendication 10, caractérisée en ce que l'insert de renfort (32, 38) est situé dans la zone de raccordement entre les ailes latérales (24) et la bande de liaison (22).

12. Lame d'essuyage selon la revendication 11, caractérisée en ce que l'insert de renfort (32) s'étend transversalement (36) au moins en partie dans les ailes latérales (24).

13. Lame d'essuyage selon l'une quelconque des revendications précédentes, caractérisée en ce que la partie supérieure (12) comporte un talon supérieur de liaison (16) renforcé par au moins une vertèbre longitudinale de renfort (18).

14. Lame d'essuyage selon la revendication 13, caractérisée en ce que la vertèbre de renfort (18) est noyée dans le talon supérieur de liaison (12, 16).

## Claims

1. A wiping strip (10), in particular for a motor vehicle screen wiper, made by extrusion in a resiliently deformable material and comprising, disposed in a succession along the median axis of the transverse cross-section of the wiping strip (10), a top mounting claw (12) arranged to be connected to a support structure for the strip (10), a median connecting rib (22) constituting a hinge, and, at the bottom, a wiping portion arranged to cooperate with a glass to be swept, characterised in that the connecting rib (22) includes at least one longitudinal reinforcing insert (30, 32, 38) which does not alter the elasticity and flexibility characteristics of the wiping strip.

2. A wiping strip according to Claim 1, characterised in that the reinforcing insert is attached to the connecting rib (22) of the wiping strip (10) during extrusion of the latter.

3. A wiping strip according to Claim 1 or Claim 2, characterised in that the reinforcing insert is embedded within the connecting rib (22).

4. A wiping strip according to any one of Claims 1 to 3, characterised in that the reinforcing insert extends longitudinally over the whole length of the wiping strip.

5. A wiping strip according to any one of the preceding Claims, characterised in that the connecting rib (22) includes a series of superimposed reinforcing inserts (30) along the median axis of the longitudinal cross section of the connecting rib (22).

6. A wiping strip according to any one of the preceding Claims, characterised in that the reinforcing insert is a flexible member.

7. A wiping strip according to Claim 6, characterised in that the reinforcing insert is made in the form of a reinforcing wire (30).

8. A wiping strip according to Claim 6, characterised in that the reinforcing insert is made in the form of a reinforcing strip (38).

9. A wiping strip according to Claim 8, characterised in that the reinforcing insert (38) is a textile strip.

10. A wiping strip according to any one of the preceding Claims, characterised in that it has two opposed lateral wing portions (20, 24) which extend transversely from either side of the connecting rib (22).

11. A wiping strip according to Claim 10, characterised in that the reinforcing insert (32, 38) is situated in the junction zone between the lateral wing portion (24) and the connecting rib (22).

12. A wiping strip according to Claim 11, characterised in that the reinforcing insert (32) extends transversely (36) at least partly into the lateral wing portions (24).

13. A wiping strip according to any one of the preceding Claims, characterised in that the top portion (12) comprises a top connecting claw (16) reinforced by at least one longitudinal reinforcing spine (18).

14. A wiping strip according to Claim 13, characterised in that the reinforcing spine (18) is encapsulated in the top connecting claw (12, 16).

## Patentansprüche

1. Wischergummi (10), insbesondere für den Scheibenwischer eines Kraftfahrzeugs, der durch Extrusion aus einem elastisch verformbaren Material ausgeführt ist und der, hintereinander entlang der Mittelachse des Querschnitts des Wischergummis (10) angeordnet, einen oberen Montageabsatz (12), der für die Verbindung mit einer Tragstruktur des Wischergummis (10) vorgesehen ist, einen mittleren Verbindungssteg (22), der ein Gelenkband bildet, und einen unteren Wischteil (14) umfaßt, der für das Zusammenwirken mit einer zu wischenden Glasscheibe vorgesehen ist , **dadurch gekennzeichnet,** daß der Verbindungssteg (22) mindestens einen Längsverstärkungseinsatz (30, 32, 38) umfaßt, durch den die Elastizitäts- und Flexibilitätseigenschaften des Wischergummis nicht beeinträchtigt werden.

2. Wischergummi nach Anspruch 1 , **dadurch gekennzeichnet,** daß der Verstärkungseinsatz mit dem Verbindungssteg (22) des Wischergummis (10) bei dessen Extrusion verbunden wird.

3. Wischergummi nach einem der Ansprüche 1 oder 2, **dadurch gekennzeichnet,** daß der Verstärkungseinsatz in den Verbindungssteg (22) eingelassen ist.

4. Wischergummi nach einem der Ansprüche 1 bis 3,**dadurch gekennzeichnet,** daß sich der Verstärkungseinsatz in Längsrichtung über die gesamte Länge des Wischergummis erstreckt.

5. Wischergummi nach einem der vorangehenden Ansprüche, **dadurch gekennzeichnet**, daß der Verbindungssteg (22) eine Reihe von Verstärkungseinsätzen (30) umfaßt, die entlang der Mittelachse des Längsschnitts des Verbindungsstegs (22) übereinander angeordnet sind.

6. Wischergummi nach einem der vorangehenden Ansprüche, **dadurch gekennzeichnet**, daß der Verstärkungseinsatz ein biegsames Organ ist.

7. Wischergummi nach Anspruch 6 , **dadurch gekennzeichnet,** daß der Verstärkungseinsatz in Form eines Verstärkungsstrangs (30) ausgeführt ist.

8. Wischergummi nach Anspruch 6 , **dadurch gekennzeichnet,** daß der Verstärkungseinsatz in Form eines Verstärkungsbands (38) ausgeführt ist.

9. Wischergummi nach Anspruch 8 , **dadurch gekennzeichnet,** daß der Verstärkungseinsatz (38) ein Textilband ist.

10. Wischergummi nach einem der vorangehenden Ansprüche, **dadurch gekennzeichnet**, daß er zwei entgegengesetzte Seitenflügel (24) umfaßt, die sich quer auf beiden Seiten des Verbindungsstegs (22) erstrecken.

11. Wischergummi nach Anspruch 10,**dadurch gekennzeichnet,** daß der Verstärkungseinsatz (32, 38) im Anschlußbereich zwischen den Seitenflügeln (24) und dem Verbindungssteg (22) angeordnet ist.

12. Wischergummi nach Anspruch 11,**dadurch gekennzeichnet,** daß sich der Verstärkungseinsatz (32) quer mindestens teilweise in den Seitenflügeln (24) erstreckt.

13. Wischergummi nach einem der vorangehenden Ansprüche, **dadurch gekennzeichnet**, daß der obere Teil (12) einen oberen Verbindungsabsatz (16) umfaßt, der durch mindestens eine Längsverstärkungsleiste (18) verstärkt ist.

14. Wischergummi nach Anspruch 13,**dadurch gekennzeichnet,** daß die Verstärkungsleiste (18) in den oberen Verbindungsabsatz (12, 16) eingelassen ist.
